# EUROPÄISCHE PATENTANMELDUNG

(11) **EP 4 332 030 A1**
(43) Veröffentlichungstag der Anmeldung: **06.03.2024**
(21) Anmeldenummer: 22192949.0
(22) Anmeldetag: 30.08.2022
(51) Int. Cl.: B65G 51/03

(54) **VORRICHTUNG ZUM FÖRDERN VON FORMTEILEN**

(71) Anmelder: Rychiger AG, 3613 Steffisburg (CH)
(72) Erfinder: Daniel, Aeschlimann, 3600 Thun (CH); Dellsperger, René, 3612 Steffisburg (CH)
(74) Vertreter: Keller Schneider Patent- und Markenanwälte AG

(57) **Zusammenfassung**

Die vorliegende Anmeldung betrifft eine Vorrichtung zum Fördern von Formteilen, insbesondere von becherartigen Behältern, in einem Luftstrom in einer Förderrichtung. Die Vorrichtung umfasst mindestens einen Förderkanal mit wenigstens zwei entlang ihrer Längsrichtung in einem Winkel zueinander stehenden länglichen Wandungen, die den Förderkanal bilden. In einer ersten der mindestens zwei Wandungen sind in einem ersten Bereich eine Mehrzahl an Lufteinlassöffnungen angeordnet, mit welchen Luft in einer Richtung, welche eine Komponente in der Förderrichtung aufweist, in den Förderkanal eingeblasen werden kann. In der ersten Wandung in einem zweiten Bereich, der an den ersten Bereich angrenzt, eine Mehrzahl an Luftauslassöffnungen angeordnet, aus denen die eingeblasene Luft entweicht, so dass zwischen den Einlassöffnungen und den Auslassöffnungen Luftströme entstehen, die die Formteile durch den Coanda-Effekt in der Förderrichtung entlang der ersten Wandung führen. Die vorliegende Anmeldung betrifft ferner eine Anlage zum Herstellen von Formteilen, die eine derartige Fördervorrichtung umfasst.

## Beschreibung

### Technisches Gebiet

Die Erfindung betrifft eine Vorrichtung zum Fördern von Formteilen mittels eines Luftstromes, wobei die Formteile in mindestens einem Förderkanal entlang mindestens einer Wandung des mindestens einen Förderkanals stabil geführt werden.

### Stand der Technik

Für die Förderung von aus einem dünnen Material, wie z.B. einer Metallfolie oder Papier, hergestellten Formteilen sind besondere Anstalten zu treffen, damit die Formteile bei der Förderung nicht beschädigt, insbesondere nicht deformiert werden oder sich Risse in diesen bilden. Insbesondere können bei höheren Fördergeschwindigkeiten keine Greifer oder dergleichen eingesetzt werden, da mit diesen eine hohe Wahrscheinlichkeit besteht, dass die Formteile beschädigt oder deformiert werden.

Für derartige Formteile werden vorzugsweise Förderanlagen eingesetzt, bei denen die Formteile mittels eines Luftstromes gefördert werden, da durch den Luftstrom auf die Formteile nur geringfügige Deformationskräfte einwirken.

Die US 7,993,081 B2 (Tokyo Electron Ltd.) offenbart eine Vorrichtung mit einem trogartigen Kanal mit Luftauslässen zur Erzeugung eines Luftkissens für den Transport von Substraten. Gleichzeitig wird ein Luftstrom zum Fördern des Substrats in einer Transportrichtung erzeugt. Zur Reduktion des Luftverbrauchs werden aufeinanderfolgende Sektionen selektiv ein- und ausgeschaltet. Bei einer ersten Ausführungsform befinden sich die Luftauslässe am Trogboden, der Luftstrom wird mit Hilfe von Vertiefungen in Transportrichtung gerichtet. Bei einer zweiten Ausführungsform sind im Boden vertikal nach oben gerichtete Luftauslässe zum Erzeugen des Luftkissens vorhanden, während der Transportstrom durch Düsen erzeugt wird, die in zwei zur Transportrichtung parallelen Reihen oberhalb des Transportraums angeordnet sind.

Die WO 2008/152481 A1 (Flexlink Techne Srl) beschreibt eine Vorrichtung zum Transport von Produkten mit geringem Gewicht (z. B. Zigarettenpackungen o. ä.). Dieser erfolgt auf einem geschlossenen Kanal, der in Transportrichtung leicht nach unten geneigt ist. Der Kanal weist auf seiner Oberseite eine Vielzahl von Durchgangsöffnungen auf, er ist zudem an eine Druckquelle, z. B. einen axialen Ventilator, gekoppelt, die im Kanal einen Überdruck erzeugt. Die durch die Durchgangsöffnungen abfliessende Luft erzeugt auf der Kanaloberseite ein Luftkissen, der Vorschub wird durch die Neigung des Kanals bewirkt.

Die US 5,017,052 (Goldco Industries) bezieht sich auf eine Vorrichtung zum Transport becherartiger Objekte, z. B. von den Teilen zweiteiliger Büchsen. Ein Luftkanal weist auf der Oberseite Öffnungen auf, die gerichtete Luftströme erzeugen und zusammen mit einem oberhalb des Kanals angeordneten Luftauslass die Objekte in Transportrichtung bewegen. Ziel ist es, mit Hilfe der Luftauslässe und dem oberen Luftauslass im Transportbereich mit Hilfe einer Kombination des Venturi- und des Bernoulli-Effekts einen Luftstrom zu erzeugen, der einen Transport ohne Taumeln der Objekte ermöglicht.

WO 2019/038177 A1 (Heuft Systemtechnik) offenbart eine Vorrichtung zum Ausleiten von Objekten, bei der parallel zu einem Geländer ein Luftstrahl erzeugt wird, der als Luftpolster dient und mittels Coanda-Effekt eine in Richtung des Geländers anziehende Kraft auf die auszuleitenden Objekte ausübt. Aufgrund des Coanda-Effekts folgt der Luftstrahl zudem dem Geländer auch in einem konvex gebogenen Bereich.

GB 2 290 278 B2 (S&C Thermofluids) beschreibt eine Transporteinrichtung, welche einen Kanal mit einem Coanda-Aufnahmemodul und mehreren nachfolgend angeordneten Beschleunigungsmodulen umfasst. Die Luftauslässe dieser Module münden in die Kanaloberseite. Mit Hilfe des Coanda-Effekts wird u. a. eine Ansaugkraft zum Aufnehmen der zu transportierenden Objekte von einem (Band-)Förderer erzeugt.

### Darstellung der Erfindung

Aufgabe der Erfindung ist es, eine dem eingangs genannten technischen Gebiet zugehörende Vorrichtung zu schaffen, mit welcher Formteile schonend und beschädigungsfrei gefördert werden können.

Die Lösung der Aufgabe ist durch die Merkmale des Anspruchs 1 definiert. Gemäss der Erfindung umfasst eine Vorrichtung zum Fördern von Formteilen, insbesondere von becherartigen Behältern, in einem Luftstrom in einer Förderrichtung mindestens einen Förderkanal mit wenigstens zwei entlang ihrer Längsrichtung in einem Winkel zueinander stehenden länglichen Wandungen, die den Förderkanal bilden. In einer ersten der mindestens zwei Wandungen sind in einem ersten Bereich eine Mehrzahl an Lufteinlassöffnungen angeordnet, mit welchen Luft in einer Richtung, welche eine Komponente in der Förderrichtung aufweist, in den Förderkanal eingeblasen werden kann. In einem zweiten Bereich, der an den ersten Bereich angrenzt, sind in der ersten Wandung eine Mehrzahl an Luftauslassöffnungen angeordnet, wobei durch den Coanda Effekt die einströmende Luft durch die Lufteinlassöffnungen zu den Luftauslassöffnungen geführt wird und durch diese entweicht, so dass im Förderkanal ein Unterdruck entsteht, der die Behälter im Förderkanal hält.

Durch den Unterdruck lassen sich die Formteile schonend und mit minimalen auf diesen wirkenden Deformationskräften im Förderkanal halten, so dass diese dem Förderkanal entlang geführt werden können. Dabei lassen sich die Formteile in der ursprüngliche Orientierung, mit der die Formteile in den Förderkanal eingeführt wurden, in diesem fördern. Da der Förderkanal keine beweglichen Teile aufweist, kann dieser einfach und kostengünstig hergestellt und an spezifische Anforderungen angepasst werden, wobei insbesondere additive Herstellungsverfahren zum Einsatz kommen können.

Die geförderten Formteile sind insbesondere aus dünnem Material gefertigt, insbesondere aus einer Folie, wie z.B. einer Metallfolie oder Papier. Vorzugsweise weisen die Formteile eine dreidimensionale Form auf, insbesondere eine becherartige Form, wie z.B. Kapseln oder ähnlich.

Zum Fördern der Formteile werden vorzugsweise die durch den zwischen den Lufteinlassöffnungen und den Luftauslassöffnungen erzeugten Luftströme verwendet. Alternativ bevorzugt kann jedoch ein zusätzlicher Luftstrom verwendet werden, der in den Förderkanal eingeblasen wird, z.B. über mindestens eine Düse.

Der Förderkanal ist vorzugsweise gerade, kann jedoch je nach Anforderung auch über mindestens einen Bogen verfügen. Die Wandungen des Förderkanals sind länglich, das heisst, deren Länge entlang der jeweiligen Förderrichtung ist wesentlich grösser als ihre Breite, insbesondere mindestens doppelt, jedoch weiter bevorzugt mindestens fünffach so lang wie breit.

Die Wandungen weisen vorzugsweise eine Dicke von 0.5 bis 5 cm auf. Die Länge der Wandungen, also deren Dimension in Förderrichtung, ist vorzugsweise von 10 cm bis zu 5 m. Die Breite der Wandungen beträgt vorzugsweise von 2 cm bis 20 cm. Die mindestens eine erste Wandung sowie die mindestens eine weitere Wandung sind vorzugsweise gleich dimensioniert, weisen demnach dieselbe Länge, Breite und Dicke auf. Alternativ können sich die Dimensionen jedoch auch unterscheiden, insbesondere können die Wandungen über eine unterschiedliche Breite und/oder Dicke verfügen. Vorzugsweise verfügen die Wandungen jedoch alle über dieselbe Länge. Die Wandungen können einstückig ausgebildet sein oder alternativ auch aus mehreren Teilstücken zusammengesetzt sein.

Die Wandungen können aus einem Metall oder eine Metalllegierung, wie z.B. Aluminium oder Stahl, gefertigt sein. Vorzugsweise sind die Wandungen jedoch aus einem Polymermaterial, insbesondere einem faserverstärkten Polymermaterial, gefertigt. Die Lufteinlass- sowie die Luftauslassöffnungen können aus einem Blech oder einer Platte durch spanabhebende Verfahren hergestellt sein, z.B. durch Bohren oder Fräsen. Alternativ können die Wandungen jedoch auch durch Druck- oder Spritzguss hergestellt werden. Besonders bevorzugt werden die Wandungen jedoch mittels eines additiven Fertigungsverfahrens, wie z.B. Sintern oder 3D-Druck, hergestellt. Durch die Verwendung eines additiven Verfahrens können die Wandungen sowie die Lufteinlass- und Luftauslassöffnungen an die jeweiligen Gegebenheiten bzw. Anforderungen einfach und schnell angepasst werden.

Der Förderkanal weist vorzugsweise mehr als zwei Wandungen auf, insbesondere drei, vier oder mehr Wandungen. Falls der Förderkanal geschlossen vorliegt, verfügt dieser vorzugsweise über vier oder mehr Wandungen. Ein offener Förderkanal kann auch über lediglich zwei oder drei Wandungen verfügen. Offen ist ein Förderkanal dann, wenn mindestens eine Seite des Förderkanals nicht durch eine Wandung verschlossen ist. Ein geschlossener Förderkanal kann jedoch auch teilweise auf mindestens einer Seite über mindestens einen offenen Abschnitt verfügen, beispielsweise zum Einbringen und/oder Entnehmen von Formteilen oder um eine Einsicht in den Förderkanal zu ermöglichen, z.B. zur Überwachung des Fördervorgangs oder zur Kontrolle der geförderten Formteile, insbesondere zur Qualitätssicherung.

Die mindestens zwei Wandungen liegen vorzugsweise entlang jeweils einer ihrer Längskanten aneinander an. Alternativ kann jedoch auch zwischen den mindestens zwei Wandungen eine Lücke vorhanden sein, das heisst, die mindestens zwei Wandungen sind entlang ihrer zueinander ausgerichteten Längskanten voneinander beabstandet. Die Lücke weist vorzugsweise eine maximale Breite von 5 cm auf, vorzugsweise jedoch von 0.2 bis 1 cm.

Der erste Bereich erstreckt sich vorzugsweise über die gesamte Länge der mindestens einen ersten Wandung. Alternativ kann der erste Bereich sich jedoch nur über mindestens einen Teilbereich der Länge der mindestens einen ersten Wandung erstrecken. Der erste Bereich erstreckt sich nur über einen Teil der Breite der mindestens einen ersten Wandung, insbesondere über nicht mehr als 50% der Breite der mindestens einen ersten Wandung.

Der zweite Bereich erstreckt sich vorzugsweise über die gesamte Länge der mindestens einen ersten Wandung. Alternativ kann der zweite Bereich sich jedoch nur über mindestens einen Teilbereich der Länge der mindestens einen ersten Wandung erstrecken. Der zweite Bereich erstreckt sich nur über einen Teil der Breite der mindestens einen ersten Wandung, insbesondere über nicht mehr als 50% der Breite der mindestens einen ersten Wandung.

Vorzugsweise ist der zweite Bereich zwischen dem ersten Bereich sowie der Längskante der mindestens einen ersten Wandung angeordnet, welche zur zweiten Wandung hin liegt.

In einer bevorzugten Ausführungsform verfügt auch die zweite Wandung über einen ersten Bereich mit Lufteinlassöffnungen sowie über einen zweiten Bereich mit Luftauslassöffnungen. Dadurch kann eine besonders gute Führung der Formteile innerhalb des Förderkanals erzielt werden.

Die Luft entweicht vorzugsweise passiv aus den Luftauslassöffnungen. Alternativ kann die Vorrichtung jedoch auch über eine Absaugvorrichtung verfügen, mit welche Luft aktiv aus den Luftauslassöffnungen gesaugt werden, z.B. eine Pumpe.

Die Luft, die durch die Lufteinlassöffnungen in den Förderkanal eingeblasen wird, wird vorzugsweise durch eine Luftversorgung bereitgestellt, beispielsweise durch einen Ventilator, eine Gasflasche, einen Kompressor oder dergleichen. Die Luftversorgung ist vorzugsweise über mindestens einen Luftzuführungskanal mit den Lufteinlassöffnungen verbunden.

Die Luft wird durch die Lufteinlassöffnungen in einer Richtung, die eine Komponente in Förderrichtung aufweist, in den Förderkanal eingeblasen. Das heisst, dass der Vektor der Richtung eine Komponente aufweist, die in die Förderrichtung weist.

Die Luft wird vorzugsweise mit einer Geschwindigkeit bzw. einem Druck durch die Lufteinlassöffnungen in den Förderkanal eingeblasen, welche in einer ruhigen Strömung mit geringer Turbulenz zwischen den Lufteinlassöffnungen sowie den Luftauslassöffnungen resultiert.

Die Lufteinlass- sowie die Luftauslassöffnungen sind vorzugsweise in regelmässigen Abständen entlang der Längsrichtung der mindestens einen ersten Wandung angeordnet. Die Anordnung der Lufteinlass- und der Luftauslassöffnungen relativ zueinander ist dabei derart gewählt, dass eine Luftströmung zwischen jeweils einer oder mehreren bestimmten Lufteinlassöffnungen sowie einer bestimmten Luftauslassöffnung entsteht. Vorzugsweise sind die Luftauslassöffnungen relativ zu den Lufteinlassöffnungen in Strömungsrichtung um eine vordefinierte Distanz versetzt. Die vordefinierte Distanz hängt hierbei insbesondere von der Richtung, in der die Luft in den Förderkanal eingeblasen wird, sowie dem Abstand der Luftauslassöffnungen von den Lufteinlassöffnungen quer zur Förderrichtung ab.

Vorzugsweise weisen alle Lufteinlassöffnungen dieselbe Form sowie dieselben Dimensionen auf. Auch die Luftauslassöffnungen weisen vorzugsweise dieselbe Form sowie dieselben Dimensionen auf. Dabei können die Lufteinlassöffnungen dieselbe Form und dieselben Dimensionen wie die Luftauslassöffnungen aufweisen. Vorzugsweise unterscheiden sich jedoch die Luftauslassöffnungen in Form und/oder Dimensionen von den Lufteinlassöffnungen.

Unter Coanda-Effekt wird die Eigenschaft von Gas- bzw. Luftströmen verstanden, entlang einer Wand zu strömen, ohne sich von dieser abzulösen. Die Luftströme zwischen den Lufteinlass- und den Luftauslassöffnungen bilden somit eine Strömungsschicht mit erhöhter Strömungsgeschwindigkeit, entlang derer die Formteile ausgerichtet und bewegt werden. Durch die Führung der Luft mittels des Coanda-Effekts entlang der Wand gelangt die Luft von den Lufteinlassöffnungen zu den Luftauslassöffnungen. Dabei wird auch Luft aus dem Förderkanal mitgerissen, so dass im Bereich der ersten Wandung ein Unterdruck entsteht, durch welchen die Formteile entlang der ersten Wandung geführt werden.

Die Vorrichtung kann je nach Anwendung über mehrere Förderkanäle verfügen, welche vorzugsweise in Förderrichtung nacheinander angeordnet sind. Sofern die Vorrichtung über mehr als einen Förderkanal verfügt, so weisen die Förderkanäle vorzugsweise dieselbe Anzahl an Wandungen sowie dieselben Winkel zwischen den Wandungen auf. Ferner weisen die mindestens zwei Wandungen aller Förderkanäle dieselbe Dicke und/oder Breite auf. Die Länge der Wandungen kann sich jedoch unterscheiden, so dass ein flexibler Einbau der Vorrichtung je nach Anforderungen möglich ist.

Wenn mehrere Förderkanäle hintereinander angeordnet sind, so schliessen diese jeweils vorzugsweise bündig aneinander an, so dass zwischen zwei benachbarten Förderkanälen kein Spalt vorhanden ist, der die Förderung der Formteile behindern oder stören könnte.

Vorzugsweise sind nacheinander angeordnete Förderkanäle miteinander verbunden, z.B. geklebt, geschweisst, geschraubt oder genietet. Alternativ können die Förderkanäle jedoch auch auf einer oder mehreren Halterungen, wie z.B. einem Gestell oder Gehäuse angeordnet sein, wobei die eine oder mehrere Halterungen die Förderkanäle in einer räumlichen Anordnung halten, so dass diese bündig aneinander stossen.

Durch das Halten der Formteile innerhalb des Förderkanals mittels des Unterdrucks und der Führung entlang der mindestens einen ersten Wandung kann ausgeschlossen werden, dass sich einzelne Formteile innerhalb des Förderkanals überholen, das heisst ihre Position innerhalb der Fördersequenz der Formteile wechseln. Dies ist z.B. dann von Vorteil, wenn ein bestimmtes Formteil innerhalb der Fördersequenz aussortiert werden muss, z.B. weil dieses eine Beschädigung oder einen Mangel aufweist. Ein mangelhaftes Formteil kann z.B. anhand eines ungewöhnlichen oder fehlerhaften Parameters eines Bearbeitungswerkzeugs bei dessen Herstellung oder mittels eines Sensors detektiert werden. Da sich die Sequenz der Formteile innerhalb des Förderkanals nicht ändert, ist gewährleistet, dass auch in einer in Förderrichtung vom Förderwerkzeug entfernt stattfindende Aussortierung beschädigter oder fehlerhafter Formteile möglich ist.

Die zwischen den Lufteinlassöffnungen und Luftauslassöffnungen bestehenden Luftströmungen verlaufen stets jeweils zwischen einem oder mehreren bestimmten Lufteinlassöffnungen und einer bestimmten der Luftauslassöffnungen. Hierzu sind die Lufteinlassöffnungen sowie die Luftauslassöffnungen entsprechend angeordnet und ausgestaltet. Dadurch wird keine Störung der Strömungsverhältnisse zwischen benachbarten Luftströmungen erzeugt. Das heisst, dass die aus einer Lufteinlassöffnung in den Förderkanal einströmende Luft aus der einen oder den mehreren bestimmten Luftauslassöffnungen austritt. Dabei ist nicht ausgeschlossen, dass ein unwesentlicher Teil der Luft, insbesondere weniger als 10% des durch eine Lufteinlassöffnung strömenden Luftvolumens, durch andere, benachbarte Luftauslassöffnungen austritt. Grundsätzlich wird durch Mitreissen von im Förderkanal befindlicher Luft durch die Luftströmungen mehr Luft aus den Luftauslassöffnungen austreten, als durch die Lufteinlassöffnungen in den Förderkanal einströmt.

Vorzugsweise beträgt der Winkel zwischen den mindestens zwei Wandungen von 30° bis 120°, vorzugsweise von 45° bis 90°. Mit einem Winkel in diesem Bereich kann ein Förderkanal geschaffen werden, bei welchem eine besonders effiziente und schonende Förderung der Formteile möglich ist.

Die Anzahl der Lufteinlassöffnungen sowie die Anzahl der Luftauslassöffnungen in der mindestens einen ersten Wandung sind vorzugsweise unterschiedlich, wobei insbesondere die Anzahl an Lufteinlassöffnungen grösser ist als die Anzahl an Luftauslassöffnungen.

Das heisst, dass die mindestens eine erste Wandung über weniger oder mehr Lufteinlassöffnungen als Luftauslassöffnungen verfügen kann. Die Anzahl unterscheidet sich insbesondere in einem ganzzahligen Verhältnis, zum Beispiel können doppelt so viele Lufteinlassöffnungen wie Luftauslassöffnungen in der mindestens einen ersten Wandung vorhanden sein, wobei zwischen zwei Lufteinlassöffnungen sowie jeweils einer Luftauslassöffnung eine Luftströmung entsteht.

Vorzugsweise ist die Dimension der Lufteinlassöffnungen in Förderrichtung kleiner als die Dimension der Luftauslassöffnungen in Förderrichtung. Dadurch können die Eigenschaften der Luftströmungen eingestellt werden, insbesondere in Bezug auf die Strömungsgeschwindigkeit sowie dem durch die Luftströmungen entstehenden Unterdruck.

Vorzugsweise verfügen die Lufteinlassöffnungen jeweils über eine Innenwandung, welche eine Lufteinlassöffnungskanal bildet. Der Lufteinlassöffnungskanal weist eine Krümmung auf, die die Luft derart umlenkt, dass diese beim Einblasen in den Förderkanal der ersten Wandung strömt, insbesondere mit einer Richtungskomponente, die der Förderrichtung entspricht.

Durch das Umlenken der einströmenden Luft wird die Entstehung des Coanda-Effekts unterstützt, da die Luft entlang der ersten Wandung strömt. Durch das Umlenken in eine Richtung, die eine Komponente aufweist, die der Förderrichtung entspricht, kann der durch das Einblasen der Luft in den Förderkanal entstehende Luftstrom die Förderung der Formteile in die Förderrichtung ermöglicht bzw. unterstützt werden.

Die Krümmung der Lufteinlassöffnungskanäle ist vorzugsweise derart gewählt, dass durch diese die Luft derart umgelenkt wird, dass diese in einem ersten Winkel von 0° bis 60°, insbesondere von 2° bis 40°, besonders bevorzugt 10° - 30° relativ zur Förderrichtung in den Förderkanal eingeblasen wird.

Das heisst, dass ein Vektor, der die Richtung, in welcher die Luft durch die Einlassöffnungen in den Förderkanal eingeblasen wird, definiert, mit einem Vektor, der die Förderrichtung repräsentiert, den ersten Winkel im erwähnten Bereich einschliesst.

Vorzugsweise verfügen die Luftauslassöffnungen jeweils über eine Innenwandung, welche einen Luftauslassöffnungskanal bilden. Der Luftauslassöffnungskanal weist eine Krümmung auf, der die ausströmende Luft von der ersten Wandung ablenkt.

Durch die Krümmung der Luftauslasskanalöffnungen wird verhindert, dass sich die Luftströmungen von der mindestens einen ersten Wandung ablösen und dadurch über die Luftsauslassöffnungen hinüber strömt. Das heisst, dass die Luft durch den Coanda- Effekt durch die Luftauslassöffnungen geleitet wird. Dabei kann vollständig auf weitere Massnahmen, wie z.B. Leitbleche verzichtet werden. So kann die Luft möglichst verwirbelungsfrei aus dem mindestens einen Förderkanal ausströmen.

Die Krümmung der Luftauslassöffnungskanäle ist vorzugsweise derart gewählt, dass diese die Luft nach deren Austritt aus dem mindestens einen Förderkanal bis zu einem zweiten Winkel von 110° bis 160°, insbesondere bis 120° relativ zur Förderrichtung umlenkt.

Das heisst, dass ein Vektor, der die Richtung, in welcher die Luft nach deren Umlenkung strömt definiert, mit einem Vektor, der die Förderrichtung repräsentiert, den zweiten Winkel im erwähnten Bereich einschliesst.

Vorzugsweise sind die Lufteinlassöffnungen und/oder die Luftauslassöffnungen plan mit der mindesten einen ersten Wandung. Dadurch weist die mindestens eine erste Wandung eine plane, ebene Oberfläche auf.

Die Lufteinlassöffnungen und/oder die Luftauslassöffnungen können alternativ bevorzugt jedoch über einen Vorsprung verfügen oder in einem Vorsprung angeordnet sein, der aus der mindestens einen ersten Wandung hinaus und teilweise in den Förderkanal hineinragt.

Durch das Vorsehen von Vorsprüngen bzw. eines Vorsprungs können die den Coanda-Effekt erzeugenden Luftströme angepasst und/oder optimiert werden, so dass die Förderung der Formteile optimiert werden kann.

Sofern jede der Lufteinlassöffnungen und/oder jede der Luftauslassöffnungen über einen separaten Vorsprung verfügt, so sind vorzugsweise alle Vorsprünge der Lufteinlassöffnungen bzw. der Luftauslassöffnungen gleich geformt und dimensioniert.

Der Vorsprung bzw. die Vorsprünge der Lufteinlassöffnungen sind vorzugsweise derart dimensioniert und geformt, dass die Lufteinlassöffnungen möglichst nahe an den im Förderkanal geförderten Formteile liegen, ohne diese jedoch zu berühren.

Vorzugsweise verfügt der Förderkanal über drei Wandungen, welche einen einseitig offenen Förderkanal bilden, wobei die zwei einander gegenüberliegenden Wandungen über Lufteinlassöffnungen und Luftauslassöffnungen verfügen, wobei die zwei einander gegenüberliegenden Wandungen insbesondere in einem Winkel von 90° relativ zur dritten Wandung und entlang von deren Längskanten angeordnet sind.

An beiden einander gegenüberliegenden Wandungen erzeugen die Luftströme einen Coanda-Effekt, wodurch die Formteile insbesondere mittig innerhalb des Förderkanals geführt werden können.

Vorzugsweise ist in Förderrichtung nach dem mindestens einen Förderkanal mindestens ein weiterer Kanal angeordnet. Der mindestens eine weitere Kanal verfügt vorzugsweise über keine Wandung mit Lufteinlass- und Luftauslassöffnungen. Die Formteile werden daher innerhalb des mindestens einen weiteren Kanals vorzugsweise mittels eines darin vorherrschenden oder erzeugten Luftstroms gefördert. Alternativ kann der mindestens eine weitere Kanal auch gegenüber der Horizontalen geneigt sein, so dass die die Formteile durch die Gravitationskraft entlang des mindestens einen weiteren Kanals bewegt werden.

Der mindestens eine weitere Kanal weist vorzugsweise dieselbe Anzahl an Wandungen, dieselben Winkel zwischen den Wandungen wie der mindestens eine Förderkanal auf.

Weiter bevorzugt weisen die Wandungen des mindestens einen weiteren Kanals dieselbe Breite und/oder Dicke auf wie diejenigen des mindestens einen Förderkanals.

Der mindestens eine weitere Kanal schliesst vorzugsweise bündig an den mindestens einen Förderkanal an. Das heisst, dass zwischen dem mindestens einen Förderkanal sowie dem mindestens einen weiteren Kanal keine Lücke besteht, welche den Übertritt der Formteile vom mindestens einen Förderkanal in den mindestens einen weiteren Kanal behindern oder stören könnte.

Vorzugsweise ist der mindestens eine weitere Kanal fest mit dem mindestens einen Förderkanal verbunden, z.B. geklebt, geschweisst, geschraubt oder genietet. Alternativ können der mindestens eine Förderkanal sowie der mindestens eine weitere Kanal jedoch auch auf einer oder mehreren Halterungen, wie z.B. einem Gestell oder Gehäuse, angeordnet sein, wobei die eine oder mehreren Halterungen den mindestens einen Förderkanal sowie den mindestens einen weiteren Kanal in einer räumlichen Anordnung halten, so dass diese bündig aneinander stossen.

Der mindestens eine weitere Kanal ist vorzugsweise aus demselben Material gefertigt wie der mindestens eine Förderkanal. Alternativ kann der mindestens eine weitere Kanal jedoch auch aus einem anderen Material gefertigt sein als der mindestens eine Förderkanal.

Vorzugsweise ist in Förderrichtung nach dem mindestens einen Förderkanal ein Weichenelement angeordnet, mit welchem sich die mit der Vorrichtung geförderten Formteile auf mindestens zwei in Förderrichtung nach dem Weichenelement angeordnete weitere Kanäle selektiv leiten lassen.

Dadurch kann ein Strom an Formteilen im mindestens einen Förderkanal auf mehrere weitere Kanäle aufgeteilt werden, zum Beispiel um diese für eine weitere Bearbeitung auf mehrere Arbeitspositionen oder Bearbeitungsstrassen aufzuteilen. Ferner kann auch einer der mindestens zwei weiteren Kanäle zum Aussondern von beschädigten oder fehlerhaften Formteilen dienen, die beispielsweise mittels am oder im mindestens einen Förderkanal angeordneten Sensoren oder einer Kamera identifiziert werden.

Das Weichenelement kann beispielsweise über mindestens eine Druckluftdüse verfügen, mit welcher durch Druckluftstösse Formteile z.B. seitlich verschoben werden können, um diese in einen spezifischen der weiteren Kanäle umzuleiten. Alternativ kann das Weichenelement auch über mindestens eine bewegliche Zunge verfügen, mit welcher die Formteile mechanisch in einen der mindestens zwei weiteren Kanäle geleitet werden können.

Vorzugsweise weist das Weichenelement jedoch mindestens zwei übereinander oder nebeneinander liegende Ablenkkanäle auf, welche mittels eines Antriebs selektiv zwischen dem mindestens einen Förderkanal sowie einem der mindestens zwei weiteren Kanäle verfahren werden können, wobei die Ablenkkanäle über entsprechende Bogenabschnitte verfügen, um zwischen dem mindestens einen Förderkanal sowie jeweils einem der weiteren Kanäle eine durchgehende Verbindung herzustellen.

Die mindestens zwei Ablenkkanäle sind vorzugsweise in vertikaler Richtung übereinander angeordnet. Dies ermöglicht eine möglichst platzsparende Ausgestaltung des Weichenelements, wobei auch mehr als zwei Ablenkkanäle übereinander angeordnet werden können, insbesondere drei, vier, fünf, sechs oder mehr Ablenkkanäle. Alternativ können die mindestens zwei Ablenkkanäle jedoch auch horizontal nebeneinander angeordnet sein.

Die mindestens zwei Ablenkkanäle sind vorzugsweise entlang mindestens einer Linearführung verfahrbar angeordnet. Zum Verfahren der mindestens zwei Ablenkkanäle verfügt die Vorrichtung vorzugsweise über einen Antrieb, z.B. einem pneumatischen, hydraulischen, elektrischen oder elektromechanischen Antrieb. Insbesondere bevorzugt verfügt die Vorrichtung zum Verfahren der mindestens zwei Ablenkkanäle über einen Servomotor.

Ein derartiges Weichenelement kann auch im Zusammenhang mit Fördervorrichtungen verwendet werden, welche über keinen erfindungsgemässen Förderkanal verfügen, also mit Fördervorrichtungen, bei denen die Formteile nicht mittels Coanda-Effekt in den Kanälen geführt werden.

Vorzugsweise ist der mindestens eine Förderkanal relativ zur Horizontalen geneigt, insbesondere in einem Winkel von 20° bis 70°, besonders bevorzugt von 45°. Vorzugsweise zeigt die Neigung in Förderrichtung, das heisst, dass die Formteile in Förderrichtung heruntergleiten. Bei einem geneigten Förderkanal kann beispielsweise auf die Bereitstellung eines zusätzlichen Luftstroms zum Fördern der Formteile verzichtet werden, da die Formteile durch die Schwerkraft in der Förderrichtung gezogen werden.

Der zweite Bereich ist vorzugsweise in vertikaler Richtung unterhalb des ersten Bereichs in der mindestens einen ersten Wandung angeordnet. Dadurch wird durch die Luftströmungen im zweiten Bereich ein im unteren Bereich der mindestens einen ersten Wandung wirkender Unterdruck erzeugt, der die Formteile sowohl entlang der mindestens einen ersten Wandung wie auch entlang der zweiten Wandung führt. Dadurch wird eine sichere Führung innerhalb des Förderkanals gewährleistet, ohne dass bei einem offenen Kanal die Gefahr besteht, dass Formteile aus dem Förderkanal geweht werden.

Vorzugsweise sind in der mindestens einen ersten Wandung in einem dritten Bereich, der sich auf der dem zweiten Bereich gegenüberliegenden Seite des ersten Bereichs entlang der ersten Wandung erstreckt, eine Mehrzahl an zweiten Luftauslassöffnungen angeordnet.

Durch die im dritten Bereich angeordnete Luftaustrittsöffnungen werden zusätzlich zu den Luftströmungen, die zwischen den Lufteintrittsöffnungen und den Luftaustrittsöffnungen im ersten Bereich entstehen, auch Luftströmungen zwischen den Lufteintrittsöffnungen sowie den Luftaustrittsöffnungen im dritten Bereich erzeugt, welche ebenfalls einen Coanda-Effekt auf die im Förderkanal geförderten Formteile ausüben.

Vorzugsweise sind die Lufteintrittsöffnungen im ersten Bereich sowie die Luftaustrittsöffnungen im zweiten und im dritten Bereich derart angeordnet, dass durch die Luftströmungen zwischen den Lufteintrittsöffnungen und den Luftaustrittsöffnungen im ersten Bereich auf die Formteile eine in vertikaler Richtung wirkende Kraft ausgeübt wird und zwischen den Lufteintrittsöffnungen und den Luftaustrittsöffnungen im dritten Bereich eine in horizontaler Richtung wirkende Kraft.

Vorzugsweise verfügt der mindestens eine Förderkanal über wenigstens einen Schieber, mit dem mindestens eine der Lufteinlassöffnungen selektiv verschlossen und geöffnet werden kann. Vorzugsweise können alle Lufteinlassöffnungen mit dem mindestens eine Schieber selektiv verschlossen werden. Der Einsatz des mindestens einen Schiebers ermöglicht es einerseits, den Verbrauch von Luft zu verkleinern, da so Lufteinlassöffnungen, an denen gerade kein Formteil vorbei gefördert wird, verschlossen werden können. Besonders vorteilhaft ist dies, wenn die Vorrichtung im Zusammenhang mit einer Bearbeitungseinheit verwendet wird, bei welcher Formteile nicht kontinuierlich hergestellt werden, sondern in einer getakteten Arbeitsweise. In diesem Fall können die die Lufteinlassöffnungen geschlossen werden, so lange bis die Formteile durch die Bearbeitungseinheit fertiggestellt sind und in den Förderkanal überführt oder ausgestossen werden. Andererseits können die Luftströmungen in einem Bereich des Förderkanals kurzzeitig unterbrochen werden, wenn ein Formteil in diesem Bereich in den Förderkanal eingebracht wird, so dass die Ausrichtung des Formteils durch die Luftströmungen nicht verändert wird und auch der Einbringvorgang durch diese nicht gestört wird.

Vorzugsweise lassen sich mittels des mindestens einen Schiebers zusätzlich zu den Lufteinlassöffnungen auch Luftauslassöffnungen im zweiten Bereich und - falls vorhanden - im dritten Bereich verschliessen.

Der mindestens eine Schieber wird bevorzugt durch einen Antrieb aus einer ersten Position, in welcher der mindestens eine Schieber keine Lufteintrittsöffnungen verschliesst, in eine zweite Position bewegt, in welcher der mindestens eine Schieber mindestens eine Lufteintrittsöffnung verschliesst. Der Antrieb kann ein pneumatischer, hydraulischer, elektrischer oder elektromechanischer Antrieb sein, insbesondere ein Servomotor.

Die vorliegende Anmeldung betrifft ferner eine Anlage zum Herstellen von Formteilen, welche eine Bearbeitungseinheit umfasst, mit welcher mittels mindestens eines Bearbeitungswerkzeugs aus einem Material, insbesondere einem Bandmaterial, Formteile hergestellt werden können. Die Anlage weist ferner eine Vorrichtung gemäss oben stehender Beschreibung auf, bei welcher der mindestens eine Förderkanal auf einer Seite offen ist. Der mindestens eine Förderkanal ist derart angeordnet, dass die Formteile mittels einer Ausstossvorrichtung nach deren Herstellung in der Bearbeitungseinheit in den mindestens einen Förderkanal überführbar sind.

Mit der erfindungsgemässen Anlage können daher Formteile hergestellt und anschliessend von der Bearbeitungsstation weggefördert werden, beispielsweise zu einer weiteren Bearbeitungsstation oder einer Packstation. Mit der Bearbeitungseinheit werden vorzugsweise Formteile aus dem Material gestanzt und/oder dreidimensional geformt. Insbesondere bevorzugt werden mittels der Bearbeitungsstation becherartige Behälter aus einem Bandmaterial hergestellt. Dabei wird das Bandmaterial mittels des mindestens einen Bearbeitungswerkzeugs zunächst gestanzt und das Stanzteil anschliessend dreidimensional geformt, insbesondere durch dasselbe mindestens eine Bearbeitungswerkzeug.

Die mindestens eine Ausstossvorrichtung ist vorzugsweise als mindestens eine Luftdüse ausgestaltet, mit welcher ein Formteil mittels eines Luftstosses aus der Bearbeitungseinheit in den mindestens einen Förderkanal überführt werden kann. Der Luftstoss erfolgt dabei derart, dass das Formteil einer Flugbahn folgt, mit welcher das Formteil im mindestens einen offenen Förderkanal landet. Alternativ oder zusätzlich kann die Ausstossvorrichtung jedoch auch über eine Rutsche verfügen. Die Rutsche mündet vorzugsweise oberhalb einer offenen Seite des mindestens einen Förderkanals.

Die Bearbeitungseinheit verfügt vorzugsweise über mehrere Bearbeitungswerkzeuge, welche in einer Reihe nebeneinander, parallel zur Förderrichtung der Formteile, linear verschiebbar angeordnet sind. Die Bearbeitungswerkzeuge sind vorzugsweise auf Trägern angeordnet, welche entlang einer Linearführung verschiebbar gelagert sind. Durch eine koordinierte Hin- und Herbewegung der Bearbeitungswerkzeuge bzw. der Träger mit einem Vorschub des Materials zu den Bearbeitungswerkzeugen hin kann eine höhere Ausnutzung des Materials erzielt werden, insbesondere da beim Bearbeiten eines Bandmaterials die Bearbeitungswerkzeuge nach jedem Bearbeitungstakt um mindestens die Hälfte ihres Durchmessers versetzt werden können, damit möglichst wenig Bandmaterial verloren geht.

Bei linear verschiebbaren Bearbeitungswerkzeugen ist der mindestens eine Förderkanal vorzugsweise offen ausgebildet, so dass mittels der Bearbeitungswerkzeuge hergestellte Formteile in jeder linearen Position der Bearbeitungswerkzeuge in den mindestens einen Förderkanal gelangen können. Sofern die Bearbeitungseinheit mindestens eine Ausstossvorrichtung umfasst, so wird diese vorzugsweise mit den Bearbeitungswerkezeugen linear verschoben. Vorzugsweise verfügt jedes der Bearbeitungswerkzeuge über eine Ausstossvorrichtung, z.B. eine Luftdüse oder Rutsche, welche zusammen mit den Bearbeitungswerkzeugen linear verschoben werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: schematisch eine Ausführungsform eines Förderkanals einer erfindungsgemässen Vorrichtung;
- Fig. 2: schematisch den Förderkanal gemäss Fig. 1 von oben;
- Fig. 3: eine perspektivische Ansicht einer zweiten Ausführungsform eines Förderkanals;
- Fig. 4: den Förderkanal der Fig. 3 in einem Längsschnitt in einer Ebene, die die Lufteinlassöffnungen schneidet;
- Fig. 5: den Förderkanal der Fig. 3 in einem Längsschnitt in einer Ebene, die die Luftauslassöffnungen schneidet;
- Fig. 6: eine weitere Ausführungsform eines Förderkanals;
- Fig. 7: schematisch eine Anlage mit einer erfindungsgemässen Vorrichtung;
- Fig. 8 und 9: schematisch ein Weichenelement der Vorrichtung aus Fig. 6;
- Fig. 10: eine weitere Ausführungsform eines Förderkanals einer erfindungsgemässen Vorrichtung mit einem dritten Bereich, in welchem Luftaustrittsöffnungen angeordnet sind.

Grundsätzlich sind in den Figuren gleiche Teile mit gleichen Bezugszeichen versehen.

### Wege zur Ausführung der Erfindung

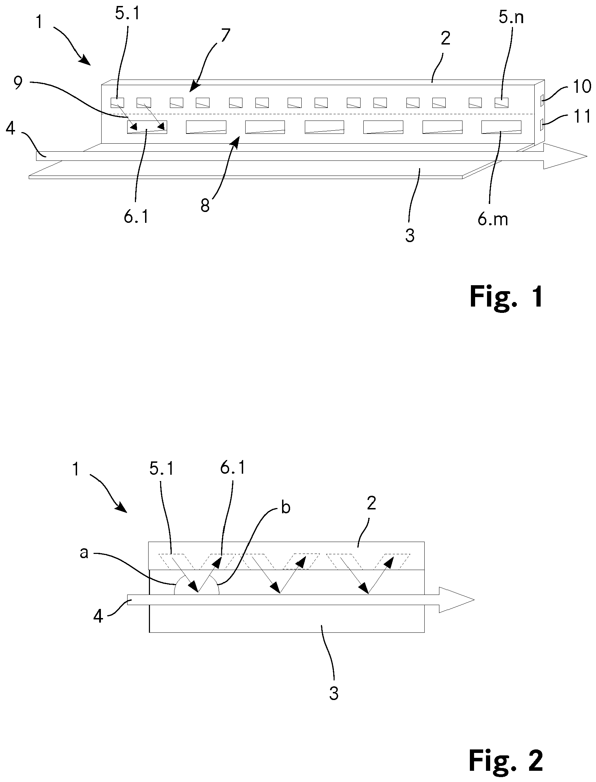

Die Fig. 1 zeigt schematisch eine Ausführungsform eines Förderkanals 1 einer erfindungsgemässen Vorrichtung. Der Förderkanal 1 weist eine erste Wandung 2 sowie eine zweite Wandung 3 auf. Die erste Wandung 2 sowie die zweite Wandung 3 stehen bei der gezeigten Ausführungsform im rechten Winkel zueinander, wobei die beiden Wandungen 2, 3 entlang einer Längskante aneinander liegen. Die beiden Wandungen 2, 3 bilden den Förderkanal 1, entlang dem die Formteile in einer Förderrichtung 4 (mit Pfeil angedeutet) gefördert werden. In der ersten Wandung 2 ist in einem ersten Bereich 7 eine Mehrzahl an Lufteinlassöffnungen 5.1 - 5.n angeordnet. Der erste Bereich 7 erstreckt sich entlang der Längskante der ersten Wandung 2, welche von der zweiten Wandung 3 weggerichtet ist. In einem den Lufteinlassöffnungen 5.1 - 5.n vorgelagerten Lufteinlassöffnungskanal wird eine Luftströmung durch eine Krümmung umgelenkt, so dass diese in einem ersten Winkel relativ zur Förderrichtung 4 in den Förderkanal 1 eingeblasen wird, wobei die Luft im Wesentlichen der ersten Wandung 2 entlang strömt. Ferner weist die erste Wandung 2 eine Mehrzahl an Luftauslassöffnungen 6.1 - 6.m auf, die in einem zweiten Bereich 8 angeordnet sind. Durch die Luftauslassöffnungen 6.1 - 6.m kann Luft aus dem Förderkanal 1 entweichen oder abgesaugt werden. Die Luftauslassöffnungen 6.1 - 6.m sind derart ausgestaltet, dass die Luft bis zu einem zweiten Winkel relativ zur Förderrichtung 4 umgelenkt wird und aus dem Förderkanal 1 entweichen bzw. ausgesaugt werden kann. Durch Umlenken der Luft in den Lufteinlassöffnungskanälen und deren Einströmen im ersten Winkel in den Förderkanal 1 strömt die Luft aufgrund des Coanda-Effekts der ersten Wandung 2 entlang zu den Luftaustrittsöffnungen 6.1 - 6.m. Dabei wird auch im Förderkanal 1 anwesende Luft mitgerissen, wodurch ein Unterdruck im Bereich der ersten Wandung 2 entsteht. Durch den Unterdruck wird verhindert, dass die Formteile aus dem Förderkanal 1 austreten. Ferner werden die Formteile durch den Unterdruck entlang der ersten Wandung 2 geführt. Zum Versorgen der Luftauslassöffnungen 5.1 - 5.n mit Luft verfügt die erste Wandung 2 in der gezeigten Ausführungsform über einen Luftzuführungskanal 10, welcher an eine Luftversorgung (nicht gezeigt) angeschlossen werden kann, z.B. einen Ventilator, einen Kompressor oder eine Druckluftflasche. Zum Abführen der Luft aus den Luftauslasskanälen 6.1 - 6.m verfügt die erste Wandung 2 in der gezeigten Ausführungsform über einen Luftabführkanal 11, welcher zum Beispiel mit einer Pumpe verbunden werden kann, sofern die Luft aktiv abgesogen werden soll.

Die Fig. 2 zeigt schematisch den Förderkanal 1 gemäss Fig. 1 von oben. Wie ersichtlich ist, wird die Luft umgelenkt und durch die Lufteinlassöffnungen 6.1 - 6.n im ersten Winkel a relativ zur Förderrichtung 4 in den Förderkanal 1 eingeblasen, so dass diese im Wesentlichen entlang der ersten Wandung 2 strömt. Beim Verlassen des Förderkanals 1 wird die Luft in den Luftauslassöffnungen 6.1 - 6.m bis zum zweiten Winkel b umgelenkt. Durch das Umlenken wird verhindert, dass sich die Luftströmung von der Wandung ablöst und eine störende Verwirbelung entsteht, wie dies beispielsweise bei einer Luftauslassöffnung mit einer rechtwinklig zur ersten Wandung 2 stehenden Seitenwand der Fall wäre. Es ist zu beachten, dass die durch eine der Lufteinlassöffnungen 5.1 - 5.n in den Förderkanal 1 einströmende Luft diesen durch die Luftauslassöffnungen 6.1 - 6.m verlässt. Durch die Luftauslassöffnungen 6.1 - 6.m tritt mehr Luft aus, als durch die Lufteinlassöffnungen 5.1 - 5.n eintritt, da die Luftströmung im Förderkanal befindliche Luft mitreisst, was zur Bildung eines Unterdrucks im mindestens einen Förderkanal, insbesondere im Bereich der ersten Wandung 2 führt.

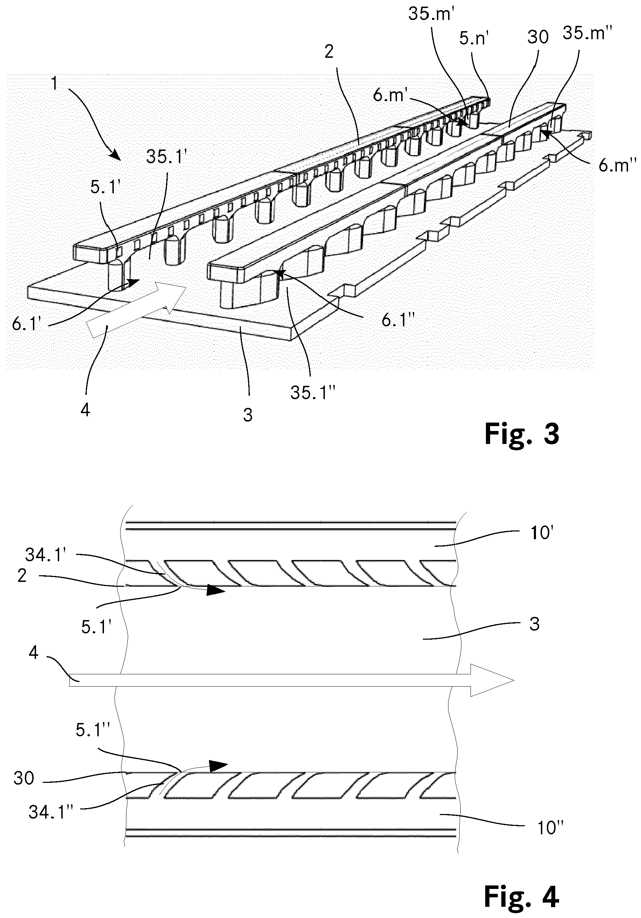

Die Fig. 3 zeigt eine perspektivische Ansicht einer zweiten Ausführungsform eines Förderkanals 1. Bei dieser Ausführungsform verfügt der Förderkanal 1 über eine erste Wandung 2 sowie eine dieser gegenüberliegenden dritte Wandung 30, welche jeweils in einem rechten Winkel zu einer zweiten Wandung 3 stehend auf dieser angeordnet sind. Die erste Wandung 2 sowie die dritte Wandung 30 verfügen über eine Mehrzahl an Lufteinlassöffnungen 5.1' - 5.n', 5.1" - 5.n" sowie Luftauslassöffnungen 6.1' - 6.m', 6.1" - 6.m". Die Formteile werden zwischen den beiden einander gegenüberliegenden Wandungen 2, 30 in die Förderrichtung 4 gefördert. Dadurch, dass die an den zwei einander gegenüberliegenden Wandungen 2, 30 durch die Lufteinlassöffnungen 5.1' - 5.n', 5.1" - 5.n" sowie Luftauslassöffnungen 6.1' - 6.m', 6.1" - 6.m" erzeugte Luftströmungen symmetrisch zueinander sind sowie dem durch diese Luftströmungen erzeugten Unterdruck innerhalb des Förderkanals 1 werden die Formteile innerhalb des Förderkanals 1 zentriert geführt. Auf der Fig. 3 gut erkennbar sind die Luftauslassöffnungskanäle 35.1' - 35.m', 35.1" - 35.m", welche jeweils eine Krümmung aufweisen, so dass die Luft verwirbelungsfrei und ohne weitere Massnahmen, wie z.B. Leitbleche durch die Luftauslassöffnungen 6.1' - 6.n', 6.1" - 6.n" ausströmen kann.

Die Fig. 4 zeigt den Förderkanal 1 der Fig. 3 in einem Längsschnitt in einer Ebene, die die Lufteinlassöffnungen 5.1' - 5.n', 5.1" - 5.n" schneidet. Gut ersichtlich ist die Konfiguration der Lufteinlassöffnungskanäle 34.1' - 34.n', 34.1" - 34.n" derart, dass die Luft umgelenkt wird, um im Wesentlichen entlang der ersten Wandung 2 und der dritten Wandung 30 zu strömen (durch Pfeile angedeutet), wobei die Luft im ersten Winkel in den Förderkanal 1 eintritt. Die Krümmung der Lufteinlassöffnungskanäle 34.1' - 34.n', 34.1" - 34.n" beträgt bei der gezeigten Ausführungsform einen Radius von 5 bis 6 cm in Förderrichtung 4 auf. Ersichtlich sind zudem die Luftzuführkanäle 10', 10", durch welche die Lufteinlassöffnungen 5.1' - 5.n', 5.1" - 5.n" mit Luft versorgt werden und welche sich jeweils in den beiden einander gegenüberliegenden Wandungen 2, 30 befinden. Die Breite der Lufteinlassöffnungskanäle 34.1' - 34.n', 34.1" - 34.n"nimmt von den Luftzufuhrkanälen 10', 10" zu den Lufteinlassöffnungen 5.1' - 5.n', 5.1" - 5.n" hin ab. Bei der gezeigten Ausführungsform weisen die einander gegenüberliegenden Wände der Lufteinlassöffnungskanäle 34.1' - 34.n', 34.1" - 34.n"27615-einen Winkel von 15° relativ zueinander auf.

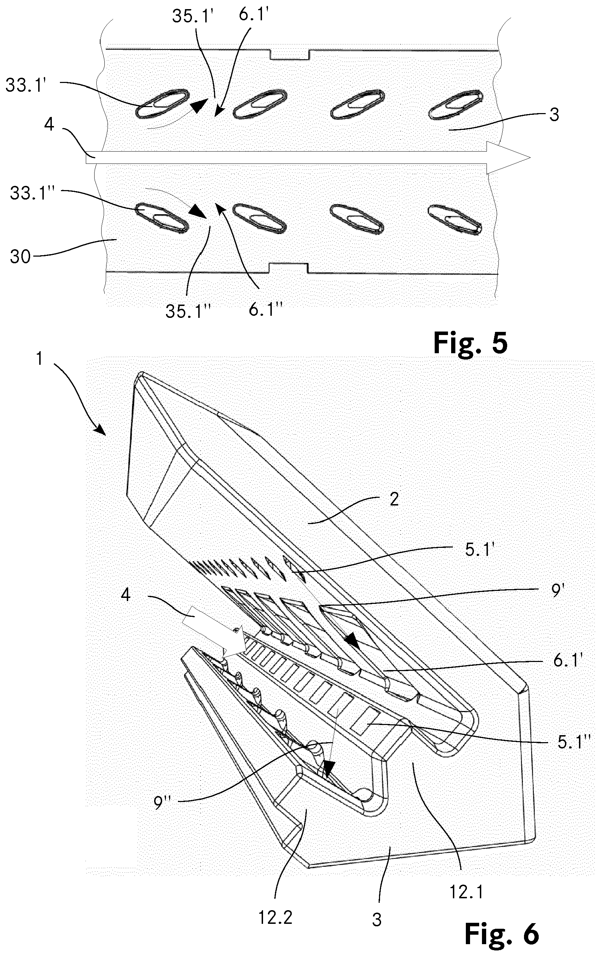

Die Fig. 5 zeigt den Förderkanal 1 der Fig. 3 in einem Längsschnitt in einer Ebene, die die Luftauslassöffnungen 6.1' - 6.m', 6.1" - 6.m" schneidet. Gut ersichtlich ist die Konfiguration der Luftauslassöffnungskanäle 35.1' - 35.m', 35.1" - 35.m" derart, dass die Luft verwirbelungsfrei und ohne weitere Massnahmen, wie z.B. Leitbleche aus dem Förderkanal 1 ausströmen kann. Die Wandung der Luftauslassöffnungskanäle 35.1' - 35.m', 35.1" - 35.m" besteht auf zwei Seiten aus Pfeilern 33.1'-33.m', 33.1" - 33.m". Die Pfeiler 33.1'-33.m', 33.1" - 33.m" weisen Seitenwände auf, welche im zweiten Winkel relativ zur Förderrichtung 4 stehen bzw. eine Krümmung aufweisen, der die Luft bis zum zweiten Winkel umlenkt.

Auf der Fig. 6 ist eine weitere Ausführungsform eines Förderkanals 1 dargestellt, bei welchem die erste Wandung 2 in einem Winkel von 45° zur zweiten Wandung 3 steht. Bei dieser Ausführungsform verfügen sowohl die erste Wandung 2 wie auch die zweite Wandung 3 über Lufteinlassöffnungen 5.1' - 5.n', 5.1" - 5.n" sowie Luftauslassöffnungen 6.1' - 6.m', 6.1" - 6.m". Die Lufteinlassöffnungen 5.1" - 5.n" sowie Luftauslassöffnungen 6.1" - 6.m" der zweiten Wandung 3 sind bei der gezeigten Ausführungsform jeweils in Vorsprüngen 12.1, 12.2 angeordnet, welche in den Förderkanal 1 hineinragen.

Die durch den Coanda-Effekt erzeugten Luftströmungen zwischen den jeweiligen Lufteinlassöffnungen 5.1' - 5.n', 5.1" - 5.n" und Luftauslassöffnungen 6.1' - 6.m', 6.1" - 6.m" bewirken im Bereich der ersten Wandung 2 und der dritten Wandung 3 jeweils einen Unterdruck. Der Unterdruck im Bereich der ersten Wandung 2 führt zu einer Führung der Formteile entlang der zweiten Wandung 2, das heisst eine Führung in horizontaler Richtung. Der Unterdruck im Bereich der dritten Wandung 3 führt zu einer Führung der Formteile entlang der dritten Wandung 3, das heisst eine Führung in vertikaler Richtung, so dass die Formteile im Förderkanal 1 gehalten werden.

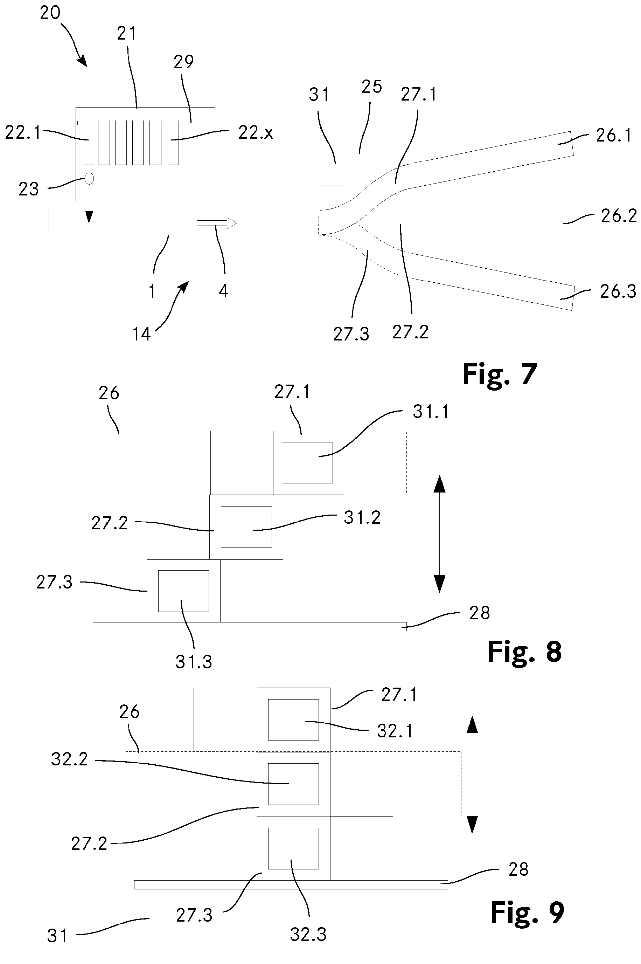

Die Fig. 7 zeigt schematisch eine Anlage mit einer erfindungsgemässen Vorrichtung 14. Die Anlage 20 umfasst eine Bearbeitungseinheit 21, mit welcher Formteile 23 (der besseren Übersichtlichkeit wegen wird nur ein Formteil 23 gezeigt) aus einem Material, wie z.B. einem Bandmaterial mittels Bearbeitungswerkzeugen 22.1 - 22.x hergestellt werden. Die Bearbeitungswerkzeuge 22.1 - 22.x sind linear verfahrbar an einer Linearführung 29 angeordnet, so dass durch ein Verschieben derselben möglichst die gesamte Breite des Materials ausgenutzt werden kann, um daraus Formteile 23 herzustellen. Über eine Ausstossvorrichtung (nicht gezeigt) werden die Formteile 23 aus den Bearbeitungswerkzeugen 22.1 - 22.x bzw. der Bearbeitungsvorrichtung 21 ausgestossen und in einen Förderkanal 1 der Vorrichtung 14 überführt. Dabei gelangen die Formteile 23 in vertikaler Richtung von oben und quer zur Förderrichtung 4 in den Förderkanal 1 bzw. fallen in den Förderkanal 1.

Anschliessend an den Förderkanal 1 ist in Förderrichtung ein Weichenelement 25 angeordnet, mit welchem die Formteile 23 vom Förderkanal 1 auf mehrere weitere Kanäle 26.1, 26.2, 26.3 geleitet werden können. Bei der gezeigten Ausführungsform weist das Weichenelement 25 drei in vertikaler Richtung übereinander angeordnete Ablenkkanäle 27.1, 27.2, 27.3 auf, welche selektiv über einen Antrieb 31 jeweils zwischen dem Förderkanal 1 und einem der weiteren Kanäle 26.1, 26.2, 26.3 verschoben werden. Jeder Ablenkkanal 27.1, 27.2, 27.3 ist so geformt, dass in der entsprechenden Position eine durchgehende Verbindung zwischen dem Förderkanal 1 und einem der weiteren Kanäle 26.1, 26.2, 26.3 hergestellt wird. Hierzu verfügen bei der gezeigten Ausführungsform zwei Ablenkkanäle 27.1, 27.3 über eine entsprechende Krümmung, mit welcher die Formteile abgelenkt werden können. Die weiteren Kanäle 26.1, 26.2, 26.3 und/oder die Ablenkkanäle 27.1, 27.2, 27.3 können wie der Förderkanal 1 über Coanda-Effekt erzeugende Lufteinlassöffnungen 5.1 - 5.n sowie Auslasskanäle 6.1-6.m verfügen oder auch ohne diese ausgestaltet sein.

Auf den Fig. 8 und 9 ist schematisch das Weichenelement 25 der Vorrichtung aus Fig. 6 dargestellt. Bei der Fig. 8 handelt es sich um eine Ansicht von der Seite des Weichenelements, welches zu den weiteren Kanälen 26.1, 26.2, 26.3 hin gerichtet ist, während die Fig. 9 eine Ansicht von der dem Förderkanal 1 zugewandten Seite darstellt. Die Ablenkkanäle 27.1, 27.2, 27.3 sind in vertikaler Richtung übereinander angeordnet, wobei der unterste Ablenkkanal 27.3 auf einer Grundplatte 28 befestigt ist. Die Grundplatte 29 kann über den Antrieb 31 in vertikaler Richtung (symbolisch durch den Doppelpfeil angedeutet) verschoben werden, wobei durch diese Verschiebung jeweils selektiv einer der Ablenkkanäle 27.1, 27.2, 27.3 zwischen den Förderkanal 1 und einem der weiteren Kanäle 26.1, 26.2, 26.3 verschoben werden kann, um eine durchgehende Verbindung zwischen dem Förderkanal 1 und einem der weiteren Kanäle 26.1, 26.2, 26.3 zu schaffen. Wie auf der Fig. 8 erkennbar ist, sind die Austrittsöffnungen der Ablenkkanäle 27.1, 27.2, 27.3 horizontal zueinander versetzt, während die Austrittsöffnungen 32.1, 32.2, 32.3 vertikal übereinander stehen.

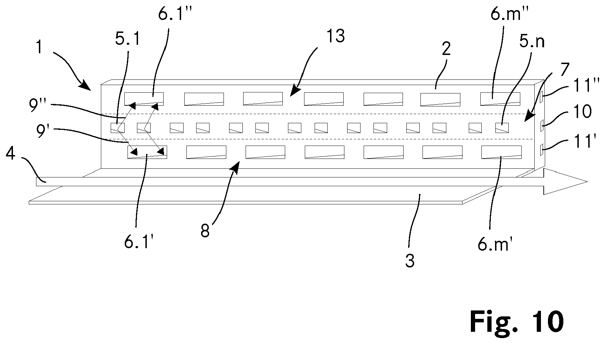

Die Fig. 10 zeigt eine weitere Ausführungsform eine Förderkanals 1 einer erfindungsgemässen Vorrichtung. Die gezeigte Ausführungsform ist im Wesentlichen gleich ausgestaltet wie diejenige der Fig. 1 mit dem Unterschied, dass die erste Wandung 1 einen dritten Bereich 13 aufweist, in welchem eine Mehrzahl an Luftauslassöffnungen 6.1" - 6.m" angeordnet sind. Die Luftauslassöffnungen 6.1" - 6.m" des dritten Bereichs 13 sind gleich ausgestaltet und in derselben Anzahl vorhanden wie die Luftaustrittsöffnungen 6.1' - 6.m' des zweiten Bereichs 8. Durch die Luftauslassöffnungen 6.1" - 6.m" des dritten Bereichs 13 lassen sich zusätzlich zu den Luftströmungen 9' zwischen den Lufteinlassöffnungen 5.1 - 5.n und den Luftauslassöffnungen 6.1' - 6.m' des zweiten Bereichs 8 durch den Coanda-Effekt weitere Luftströmungen 9" zwischen den Lufteinlassöffnungen 5.1 - 5.n und den Luftauslassöffnungen 6.1" - 6.m" des dritten Bereichs 13 erzeugen, welche ebenfalls einen Unterdruck erzeugen. Um die Luft aus den Luftauslassöffnungen 6.1" - 6.m" des dritten Bereichs 13 abzuführen, ist ein zweiter Luftabführungskanal 11" in der ersten Wandung 2 angeordnet, aus welchem die Luft entweichen bzw. abgesogen werden kann.

## Patentansprüche

1. Vorrichtung zum Fördern von Formteilen, insbesondere von becherartigen Behältern, in einem Luftstrom in einer Förderrichtung, umfassend: mindestens einen Förderkanal mit wenigstens zwei entlang ihrer Längsrichtung in einem Winkel zueinander stehenden länglichen Wandungen, die den Förderkanal bilden, **dadurch gekennzeichnet, dass** in mindestens einer ersten der mindestens zwei Wandungen in einem ersten Bereich eine Mehrzahl an Lufteinlassöffnungen angeordnet sind, mit welchen Luft in einer Richtung, welche eine Komponente in der Förderrichtung aufweist, in den Förderkanal eingeblasen werden kann, wobei in der ersten Wandung in einem zweiten Bereich, der an den ersten Bereich angrenzt, eine Mehrzahl an Luftauslassöffnungen angeordnet sind, wobei durch den Coanda Effekt die einströmende Luft durch die Lufteinlassöffnungen zu den Luftauslassöffnungen geführt wird und durch diese entweicht, so dass im Förderkanal ein Unterdruck entsteht, der die Behälter im Förderkanal hält.

2. Vorrichtung gemäss Anspruch 1, **dadurch gekennzeichnet, dass** der Winkel zwischen den mindestens zwei Wandungen von 30° bis 120°, vorzugsweise von 45° bis 90° beträgt.

3. Vorrichtung gemäss einem der Ansprüche 1 oder 2, **dadurch gekennzeichnet**, das die Anzahl der Lufteinlassöffnungen sowie die Anzahl der Luftauslassöffnungen in der mindestens einen ersten Wandung unterschiedlich ist, wobei insbesondere die Anzahl an Lufteinlassöffnungen grösser ist als die Anzahl an Luftauslassöffnungen.

4. Vorrichtung gemäss Anspruch 3, **dadurch gekennzeichnet, dass** die Dimension der Lufteinlassöffnungen in Förderrichtung kleiner ist als die Dimension der Luftauslassöffnungen in Förderrichtung.

5. Vorrichtung gemäss einem der Ansprüche 1 bis 4, **dadurch gekennzeichnet, dass** die Lufteinlassöffnungen jeweils über eine Innenwandung verfügen, welche eine Lufteinlassöffnungskanal bildet, welcher eine Krümmung aufweist, die die Luft derart umlenkt, dass diese beim Einblasen in den Förderkanal der ersten Wandung entlang strömt, insbesondere mit einer Richtungskomponente, die der Förderrichtung entspricht.

6. Vorrichtung gemäss einem der Ansprüche 1 bis 5, **dadurch gekennzeichnet, dass** die Luftauslassöffnungen jeweils über eine Innenwandung verfügen, welche einen Luftauslassöffnungskanal bilden, welcher eine Krümmung aufweist, der die ausströmende Luft von der ersten Wandung ablenkt.

7. Vorrichtung gemäss einem der Ansprüche 1 bis 6, **dadurch gekennzeichnet, dass** die Lufteinlassöffnungen und/oder die Luftauslassöffnungen plan mit der mindestens einen ersten Wandung sind.

8. Vorrichtung gemäss einem der Ansprüche 1 bis 6, **dadurch gekennzeichnet, dass** die Lufteinlassöffnungen und/oder die Luftauslassöffnungen über einen Vorsprung verfügen oder in einem Vorsprung angeordnet sind, der aus der mindestens einen ersten Wandung hinaus und teilweise in den Förderkanal hineinragt.

9. Vorrichtung gemäss einem der Ansprüche 1 bis 8, **dadurch gekennzeichnet, dass** der Förderkanal über drei Wandungen verfügt, welche einen einseitig offenen Förderkanal bilden, wobei die zwei einander gegenüberliegenden Wandungen über Lufteinlassöffnungen und Luftauslassöffnungen verfügen, wobei die zwei einander gegenüberliegenden Wandungen insbesondere in einem Winkel von 90° relativ zur dritten Wandung und entlang von deren Längskanten angeordnet sind.

10. Vorrichtung gemäss einem der Ansprüche 1 bis 9, **dadurch gekennzeichnet, dass** in Förderrichtung nach dem mindestens einen Förderkanal mindestens ein weiterer Kanal angeordnet ist.

11. Vorrichtung gemäss Anspruch 10, **dadurch gekennzeichnet, dass** in Förderrichtung nach dem mindestens einen Förderkanal ein Weichenelement angeordnet ist, mit welchem sich die mit der Vorrichtung geförderten Formteile auf mindestens zwei in Förderrichtung nach dem Weichenelement angeordnete weitere Kanäle selektiv leiten lassen.

12. Vorrichtung gemäss Anspruch 11, **dadurch gekennzeichnet, dass** das Weichenelement mindestens zwei übereinander oder nebeneinander liegende Ablenkkanäle aufweist, welche mittels eines Antriebs selektiv zwischen dem mindestens einen Förderkanal sowie einem der mindestens zwei weiteren Kanälen verfahren werden können, wobei die Ablenkkanäle über entsprechende Bogenabschnitte verfügen, um zwischen dem mindestens einen Förderkanal sowie jeweils einem der weiteren Kanäle eine durchgehende Verbindung herzustellen.

13. Vorrichtung gemäss einem der Ansprüche 1 bis 12, **dadurch gekennzeichnet, dass** der mindestens eine Förderkanal relativ zur Horizontalen geneigt ist, insbesondere in einem Winkel von 20° bis 70°, besonders bevorzugt von 45°.

14. Vorrichtung gemäss einem der Ansprüche 1 bis 13, **dadurch gekennzeichnet, dass** der zweite Bereich in vertikaler Richtung unterhalb des ersten Bereichs angeordnet sind.

15. Vorrichtung gemäss einem der Ansprüche 1 bis 14, **dadurch gekennzeichnet, dass** in der mindestens einen ersten Wandung in einem dritten Bereich, der sich auf der dem zweiten Bereich gegenüberliegenden Seite des ersten Bereichs entlang der ersten Wandung erstreckt, eine Mehrzahl an zweiten Luftauslassöffnungen angeordnet sind.

16. Vorrichtung gemäss einem der Ansprüche 1 bis 15, **dadurch gekennzeichnet, dass** der mindestens eine Förderkanal über wenigstens einen Schieber verfügt, mit dem mindestens eine der Lufteinlassöffnungen selektiv verschlossen und geöffnet werden kann.

17. Anlage zum Herstellen von Formteilen, umfassend eine Bearbeitungseinheit, mit welcher mittels mindestens eines Bearbeitungswerkzeugs aus einem Material, insbesondere einem Bandmaterial, Formteile hergestellt werden können, sowie einer Vorrichtung gemäss einem der Ansprüche 1 bis 16, bei welcher der mindestens eine Förderkanal auf einer Seite offen ist, wobei der mindestens eine Förderkanal derart angeordnet ist, dass die Formteile mittels einer Ausstossvorrichtung nach deren Herstellung in der Bearbeitungseinheit in den mindestens einen Förderkanal überführbar sind.

18. Anlage gemäss Anspruch 17, **dadurch gekennzeichnet, dass** die Bearbeitungseinheit über mehrere Bearbeitungswerkzeuge verfügt, welche in einer Reihe nebeneinander linear verschiebbar angeordnet sind.
